# EUROPÄISCHE PATENTSCHRIFT

(11) **EP 2 966 954 B1**
(45) Veröffentlichungstag und Bekanntmachung des Hinweises auf die Patenterteilung: **15.03.2017**
(21) Anmeldenummer: 14705071.0
(22) Anmeldetag: 05.02.2014
(51) Int. Cl.: A01B 23/02, A01B 15/02

(54) **SCHARSPITZE BZW. WERKZEUGKOMBINATION MIT EINER SCHARSPITZE**
SHARE TIP AND TOOL COMBINATION HAVING A SHARE TIP
POINTE DE SOC OU COMBINAISON D'OUTIL POURVUE D'UNE POINTE DE SOC

(30) Priorität: 11.03.2013 DE 102013102420
(43) Veröffentlichungstag der Anmeldung: 20.01.2016
(73) Patentinhaber: Betek GmbH & Co. KG, 78733 Aichhalden (DE)
(72) Erfinder: SMEETS, Florian, 72270 Baiersbronn (DE)
(74) Vertreter: Herrmann, Jochen
(86) Internationale Anmeldenummer: PCT/EP2014/052237
(87) Internationale Veröffentlichungsnummer: WO 2014/139733

(56) Entgegenhaltungen:
- DE-A1- 10 018 279
- DE-A1- 19 639 862
- DE-A1-102011 102 053
- FR-A1- 2 254 261

## Beschreibung

Die Erfindung betrifft eine Scharspitze für eine landwirtschaftliche Bodenbearbeitungsmaschine mit einem Basisteil das an einem Schneidenträger eine Schneide aufweist, wobei das Basisteil eine Schraubaufnahme zur Befestigung an einem Träger, insbesondere Zinken der landwirtschaftlichen Bodenbearbeitungsmaschine aufweist.

Die Erfindung betrifft weiterhin eine Werkzeugkombination mit einer Scharspitze und einem daran angeschlossenen Leitelement, wobei die Scharspitze und das Leitelement Schraubaufnahmen zur Befestigung an einem Zinken aufweisen.

Die DE 10 2011 102 053 A1 offenbart eine Werkzeugkombination mit einer Scharspitze und einem Leitblech, die gemeinsam an einem Zinken einer Bodenbearbeitungsmaschine befestigt werden können. Die Scharspitze weist an einem Schneidende einen Schneidenträger auf, der mit einem Schneidelement, bestehend aus Hartmetall bestückt ist. Seitlich des Schneidelementes sind im Winkel Sekundärschneiden auf den Schneidenträger aufgelötet. Der Schneidenträger weist eine Schraubaufnahme auf, die fluchtend zu einer Schraubaufnahme des Leitbleches ausgerichtet werden kann. Das Leitblech ist auf die Scharspitze aufgelegt und überdeckt die an die Schneide und die Sekundärschneiden anschließenden Flächenbereiche. Zur Befestigung der Kombination, bestehend aus Leitblech und Scharspitze, wird eine Befestigungsschraube frontseitig durch die zueinander fluchtenden Schraubaufnahmen von Leitblech und Scharspitze gesteckt und in eine Schraubaufnahme des Zinkens eingeschraubt. Bei rauen Einsatzbedingungen und schwierigen Bodenverhältnissen kann es nun vorkommen, dass sich das Leitblech gegenüber der Scharspitze verbiegt und aufgeschält wird. Dadurch wird dann die Funktionsfähigkeit der Werkzeugkombination zumindest erheblich beeinträchtigt.

Es ist Aufgabe der Erfindung, eine Scharspitze der eingangs erwähnten Art bzw. eine Werkzeugkombination mit einer Scharspitze bereitzustellen, die eine sichere Festlegung des Leitelementes und der Scharspitze an einem Zinken oder dergleichen Träger einer landwirtschaftlichen Bodenbearbeitungsmaschine ermöglicht und zumindest ein Sicherungselement vor Verschleiß geschützt ist

Die die Scharspitze betreffende Aufgabe der Erfindung wird dadurch gelöst, dass das Basisteil eine Aufnahme aufweist, die in Werkzeugvorschubrichtung mittels eines Deckabschnittes überdeckt ist. Das Leitelement kann mithin gesichert hinter dem Deckabschnitt mit seinem freien Ende untergebracht werden. Damit ist das Leitelement und das Sicherungselement (Schraube) in diesem Bereich vor dem Angriff des von der Scharspitze abgetragenen Bodenmaterials geschützt. Insbesondere kann sich das Leitelement an seinem freien Ende dann nicht mehr gegenüber der Scharspitze verbiegen bzw. verdrehen, sodass eine dauerhafte Funktionalität gewährleistet ist.

Gemäß einer bevorzugten Ausgestaltungsvariante der Erfindung kann es vorgesehen sein, dass die Aufnahme zur Rückseite des Basisteils hin geöffnet ist und seitlich eine Steckaufnahme bildet. Damit ist das Leitelement auch seitlich geschützt untergebracht und es kann durch die Öffnungsseite aus dem Aufnahmebereich herausgeführt werden.

Nach einer besonders bevorzugten Erfindungsausgestaltung kann eine Scharspitze derart sein, dass die Aufnahme wenigstens ein Blockierstück zur formschlüssigen Arretierung eines Leitelementes quer zur Werkzeugvorschubrichtung aufweist. Mit dem Blockierstück können das Leitelement und die Scharspitze quer zur Vorschubrichtung aneinander gehalten werden, sodass eine Reduzierung der erforderlichen Anzahl der Befestigungsmittel, insbesondere Befestigungsschrauben, erreicht wird.

Besonders bevorzugt sind im Bereich der Aufnahme zwei quer zur Werkzeugvorschubrichtung zueinander beabstandet angeordnete Blockierstücke verwendet. Zwischen diesen beiden Blockierstücken kann das Leitelement dann eingefasst werden.

Eine stabile Werkzeugkonstruktion ergibt sich dabei dadurch, dass im Bereich des Deckabschnitts zwei Blockierstücke an das Basisteil rückseitig angeformt sind und dass die Blockierstücke Anlageflächen bilden. An den Anlageflächen kann das Leitelement exakt ausgerichtet werden. Dadurch, dass die Blockierstücke rückseitig vom Basisteil abstehen, lässt sich die Aufnahme einfach fertigen. Insbesondere kann die Scharspitze dann auch als Schmiedeteil mit geringem Werkzeugaufwand gefertigt werden.

Eine weitere Stabilisierung der Blockierstücke kann dadurch erreicht werden, dass die Aufnahme einen Verbindungsabschnitt aufweist, der die Blockierstücke einteilig miteinander verbindet. Hierdurch lassen sich Querkräfte zuverlässig abtragen.

Zur Vereinfachung der Montage kann es vorgesehen sein, dass eine Steckaufnahme der Aufnahme seitlich mittels zweier zueinander beabstandet angeordneter Einführschrägen begrenzt ist. Dann lässt sich die Scharspitze einfach an das Leitelement anfügen.

Eine erfindungsgemäße Scharspitze kann dergestalt sein, dass der Schraubaufnahme in Werkzeugvorschubrichtung vorgelagert ein Vorsprung zugeordnet ist, der über eine Ableitfläche der Scharspitze vorsteht. Der Vorsprung dient als Deflektor für das Bodenmaterial und leitet dieses von einem in der Schraubaufnahme gelagerten Schraubenkopf ab. Damit ist der Schraubenkopf verschleißgeschützt positioniert.

Die Aufgabe der Erfindung wird auch mit einer Werkzeugkombination gelöst, bei der das Leitelement eine Schraubaufnahme aufweist, die mittels eines Deckabschnitts der Scharspitze überdeckt ist. Dabei ist der Deckabschnitt in Werkzeugvorschubrichtung vor dem Leitelement positioniert, sodass dieses hier gesichert untergebracht werden kann. Wie bereits oben erwähnt wurde, ist das Leitelement damit vor dem Angriff des vorbeiströmenden Bodenmaterials geschützt.

Eine Erfindungsvariante kann derart sein, dass die Scharspitze und das Leitelement quer zur Werkzeugvorschubrichtung mittels eines oder mehreren Blockierstücken formschlüssig gegeneinander blockiert sind. Bevorzugt ist die Scharspitze dabei mit nur einer Schraubaufnahme ausgestattet. In Verbindung mit der formschlüssigen Blockade lassen sich damit Befestigungselemente einsparen. Die Scharspitze kann an einem montierten Leitelement dann einfach angefügt werden wenn vorgesehen ist, dass das Leitelement im Bereich seines der Scharspitze zugewandten Endes einen Steckansatz aufweist, der seitlich in die Aufnahme eingesteckt ist.

Dabei gelingt die Montage insbesondere dann einfach, wenn der Steckansatz zwei V-förmig zueinander angestellte Führungsschrägen bildet.

Eine weitere Standzeitoptimierung lässt sich für das Leitelement auf einfache Weise dadurch erreichen, dass im Anschlussbereich an die Scharspitze ein Hartstoffelement auf das Leitelement aufgebracht ist. Das Hartstoffelement kann beispielsweise eine Panzerschicht, insbesondere eine Auftragschweißung sein oder es ist denkbar, dass Hartmetall oder dergleichen Hartstoffelemente auf das Leitelement aufgebracht sind.

Die Erfindung wird im Folgenden anhand eines in den Zeichnungen dargestellten Ausführungsbeispiels näher erläutert. Es zeigen:
- Figur 1: in perspektivischer Frontansicht eine Grubberschar mit einer Scharspitze und einem Leitelement,
- Figur 2: die Darstellung gemäß Figur 1 in Seitenansicht,
- Figur 3: ein in Figur 4 mit III-III markiertes Detail in vergrößerter Darstellung,
- Figur 4: ein in Figur 2 mit IV-IV markiertes Detail in vergrößerter Darstellung,
- Figur 5: die Scharspitze der Grubberschar gemäß Figur 1 in Einzeldarstellung und in perspektivischer Ansicht von vorne und
- Figur 6: die Scharspitze gemäß Figur 5 in perspektivischer Ansicht von hinten.

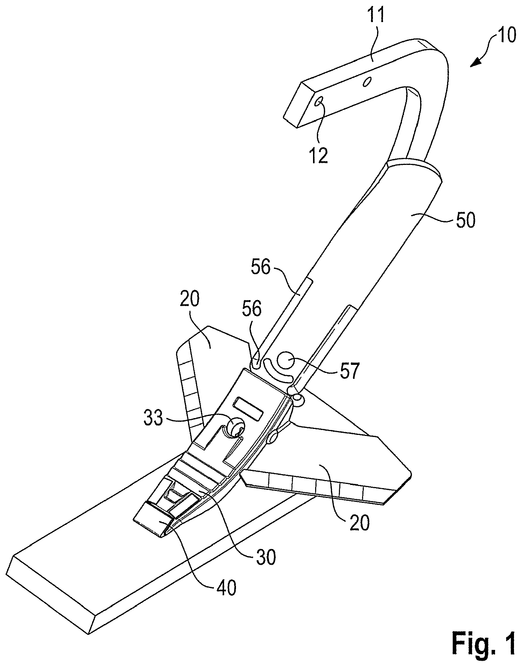

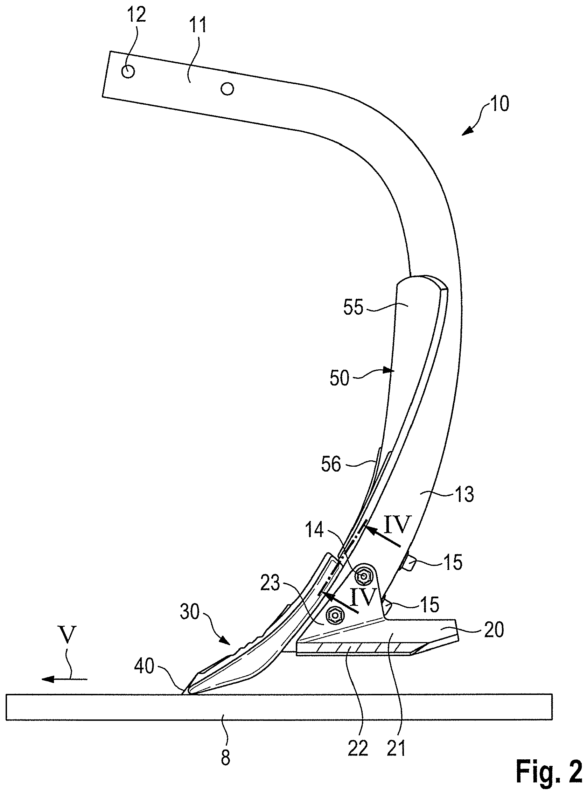

Figur 1 zeigt eine Grubberschar zum Anbau an einen Werkzeugträger, insbesondere einen (Zinken) 10 bzw. Zinkenträger bzw. Grindel oder dergleichen einer landwirtschaftlichen Bodenbearbeitungsmaschine. Der Zinken 10 weist ein Befestigungsteil 11 auf, das von Schraubaufnahmen 12 durchsetzt ist. Mittels dieser Schraubaufnahmen 12 kann der Zinken 10 an einem Geräteträger montiert werden. Wie Figur 2 weiter erkennen lässt, besitzt der Zinken 10 dem Befestigungsteil 11 abgewandt, ein Tragteil 13. An diesem Tragteil 13 können eine Scharspitze 30, ein Leitelement 50 sowie seitlich zwei Scharflügel 20 angebaut werden.

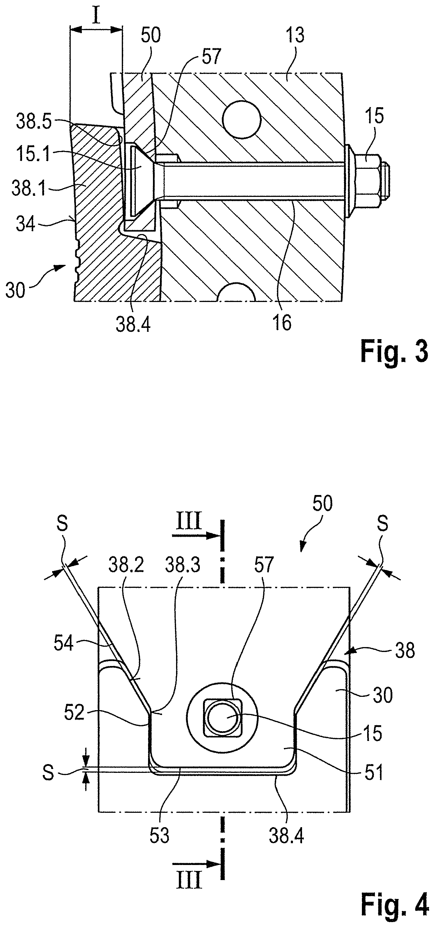

Die Scharflügel 20 besitzen einen Querträger 21, daran sind Schneidelemente 22 bestehend aus einem Hartwerkstoff befestigt. Vorzugsweise bestehen die Schneidelemente 22 aus einem Hartmetall, das stoffschlüssig mit dem Querträger 21 verbunden, insbesondere verlötet ist. Von dem Querträger 21 ist eine Abwinkelung 23 abgebogen, die mit Schraubaufnahmen ausgerüstet ist. Mittels Befestigungsschrauben 14, die durch die Schraubaufnahmen der Abwinkelung 23 sowie Schraubaufnahmen des Tragteils 13 hindurchgeführt sind, können die Scharflügel 20 an dem Zinken 10 befestigt werden. Oberhalb der Scharflügel 20 ist das Leitelement 50 mit dem Befestigungsteil 11 verbaut. Wie die Figuren 1 und 2 erkennen lassen, ist das Leitelement 50 von einem flächenförmigen bzw. geschmiedeten Stahlbauteil gebildet. Es ist so gebogen, dass sich eine spiralförmige Ableitfläche bildet. Teilweise werden auch geradlinige Ableitflächen eingesetzt. Auf dieser Ableitfläche sind Hartstoffelemente 56 in Form einer Auftragschweißung aufgebracht. Weiterhin besitzt das Leitelement 50 eine in Figur 1 deutlich erkennbare Schraubaufnahme 57. Durch diese Schraubaufnahme 57 kann eine Befestigungsschraube hindurchgesteckt werden. Diese Befestigungsschraube wird durch eine Schraubaufnahme des Tragteiles 13 hindurchgeführt und mittels einer Mutter gekontert. Figur 1 lässt erkennen, dass in Werkzeugvorschubrichtung V (Werkzeugvorschubrichtung V, Markiert in Figur 2) vor der Schraubaufnahme 57 ein bogenförmiges Hartstoffelement 56, insbesondere eine Auftragschweißung oder Hartmetallelemente angeordnet ist. Dieses Hartstoffelement 56 dient als Deflektor für vorbeigleitendes Erdreich. Damit ist der in der Schraubaufnahme 57 versenkt gehaltene Schraubkopf der Befestigungsschraube 15 vor dem abrasiven Verschleiß des Erdreiches geschützt. Wie die Figuren 2 und 3 erkennen lassen, ist das Leitelement 15 noch mittels eines zweiten Befestigungselementes, insbesondere einer Befestigungsschraube 15 an dem Zinken 10 befestigt. Hierzu weist das Leitelement 50 eine weitere Schraubaufnahme 16 auf. Diese Schraubaufnahme 16 ist fluchtend zu einer Schraubaufnahme 57 des Tragteils 13 des Zinkens 10 angeordnet. Durch die fluchtenden Schraubaufnahmen 57 und 16 kann eine Befestigungsschraube 15 hindurchgesteckt und mittels einer Mutter rückseitig gekontert werden. Das Leitelement 50 ist mithin an zwei Fixierpunkten mittels der beiden Befestigungselemente 15 sicher festgelegt. Wie Figur 3 erkennen lässt, sind die als Befestigungsschrauben ausgebildeten Befestigungselemente 15 mit einem Schraubenkopf 15.1 ausgerüstet. Die geometrische Gestaltung des Schraubenkopfes 15.1 und der Schraubaufnahme 57 ist derart, dass der Schraubenkopf 15.1 im Wesentlichen oberflächenbündig mit der Frontseite des Leitelementes 50 abschließt oder vertieft eingebracht ist. Dies lässt Figur 3 deutlich erkennen.

Figur 4 verdeutlicht weiter, dass die Schraubaufnahme 57 in einen Steckansatz 51 des Leitelementes 50 eingearbeitet ist. Der Steckansatz 51 weist zwei zueinander V-förmig im Winkel eingestellte Führungsflächen 54 auf. Diese gehen in Seitenteile 52 über. Die Seitenteile 52 sind im Bereich eines Endes 53 des Steckansatzes 51 angeordnet.

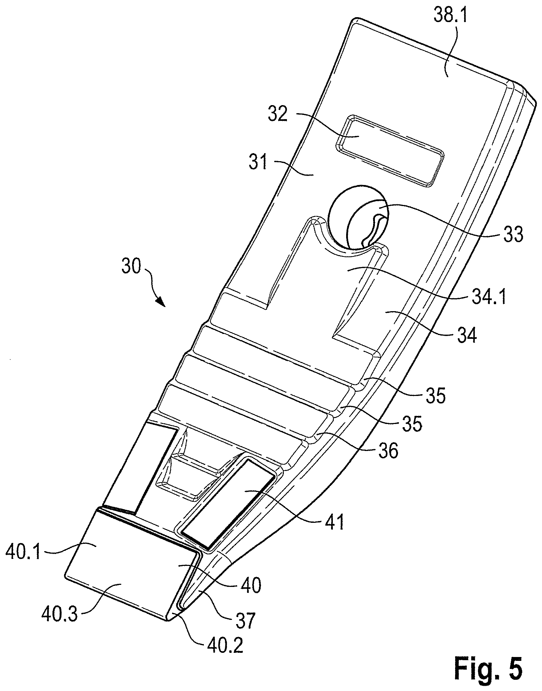

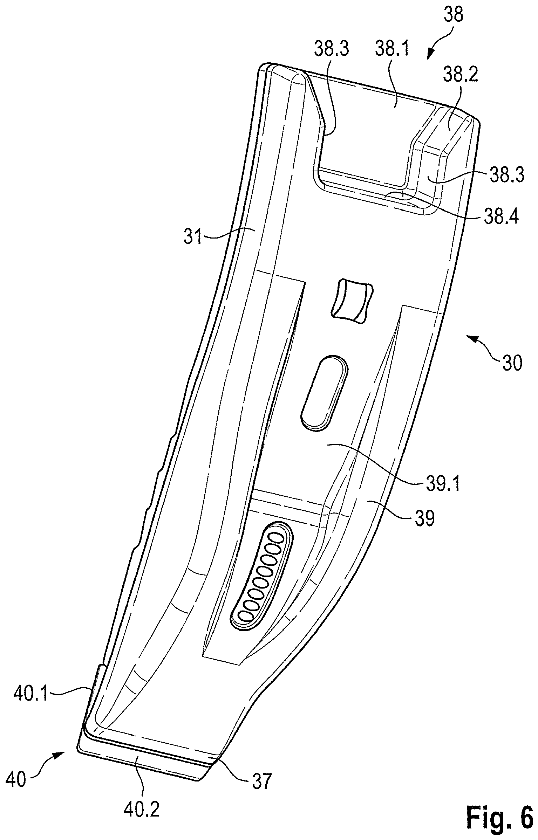

Zur Komplettierung der Grubberschar wird eine Scharspitze 30 an den Zinken 10 angebaut. Die Gestaltung der Scharspitze 30 lässt sich näher den Figuren 5 und 6 entnehmen. Wie diese Zeichnungen zeigen, besitzt die Scharspitze 30 ein Basisteil 31 das von einer Schraubaufnahme 33 durchdrungen ist. Oberhalb der Schraubaufnahme 33 ist ein Bezeichnungsfeld 32 angeordnet. Unterhalb der Schraubaufnahme 33 ist ein Vorsprung 34.1 vorgesehen, der in Form eines Deflektors über die frontseitige Ableitfläche 34 des Basisteils 31 vorsteht. Auf diese Weise bildet der Vorsprung 34.1 eine Schürze, die einen in der Schraubaufnahme 33 angeordneten Schraubenkopf vor dem abrasiven Angriff vorbeigleitenden Erdreiches schützt. In Vorschubrichtung vor dem Vorsprung 34.1 besitzt das Basisteil 31 Ansätze 35, die über die Ableitfläche 34 vorstehen. Im vorliegenden Ausführungsbeispiel sind die Ansätze 35 rippenförmig ausgebildet und quer zur Werkzeugvorschubrichtung orientiert. Zwischen den einzelnen Ansätzen 35 sind Vertiefungen 36 gebildet. Während des Werkzeugeinsatzes kann sich Erdreich in den Bereich der Vertiefungen 36 hinein komprimieren und festsetzen. Hierdurch wird eine Art natürlicher Verschleißschutz auf der Ableitfläche 34 gebildet. In Werkzeugvorschubrichtung vor den Ansätzen 35 besitzt das Basisteil 31 einen Schneidenträger 37. An diesem Schneidenträger 37 sind Schneidelemente 40 in Form von Hartmetallelementen befestigt. Die Schneidelemente 40 weisen einen flächenförmigen Befestigungsabschnitt 40.1 und einen daran angeformten, entgegen der Werkzeugvorschubrichtung V abstehenden Ansatz 40.2 auf. Im Bereich des Ansatzes 40.2 wird eine Schneide 40.3 gebildet. Die Schneidelemente 40 sind an dem Schneidenträger 37 derart befestigt, dass die freie Endkannte des Schneidenträgers 37 von den Ansätzen 40.2 der Schneidelemente 40 zumindest teilweise umgriffen wird, wie dies die Figur 2 und auch die Figur 6 deutlich erkennen lassen. Auf diese Weise wird das freie Ende des Schneidenträgers 37 verschleißgeschützt. In Vorschubrichtung hinter den Schneidelementen 40 sind auf den besonders stark verschleißbelasteten Kantenbereichen des Basisteils 31 Hartstoffelemente 21 aufgebracht. Vorliegend sind als Hartstoffelemente 41 Hartmetallplatten mit dem Basisteil 31 verlötet. Denkbar ist es jedoch auch, dass eine Panzerschweißung oder dergleichen Verwendung findet.

Figur 6 zeigt die Scharspitze 30 in Rückansicht. Wie diese Darstellung erkennen lässt, sind im Bereich oberhalb des Schneidenträgers 37 an das Basisteil 31 Vorsprünge 39 angeformt. Die Vorsprünge 39 sind rippenartig ausgebildet und im Bereich der Längskanten des Basisteils 31 angeordnet. Die Vorsprünge 39 sind zueinander beabstandet angeordnet, sodass zwischen den Vorsprüngen 39 eine Vertiefung 39.1 entsteht. An dem, dem Schneidenträger 37 abgewandten Ende, besitzt die Scharspitze 30 eine Aufnahme 38. Die Aufnahme 38 ist taschenförmig in die Rückseite der Scharspitze 38 eingeformt. Sie weist einen Deckabschnitt 38.1 auf. Seitlich schließen sich an dem Deckabschnitt 38.1 Einführschrägen 38.2 in Form von Wandelementen an. Die Wandelemente sind dabei zueinander V-förmig angestellt. Im Bereich unterhalb der Einführschrägen 38. 2 sind Blockierstücke 38.3 angeordnet. Die Blockierstücke 38.3 sind dabei zueinander beabstandet angeordnet und werden ebenfalls von Wandelementen gebildet, die von dem Deckabschnitt 38.1 aufsteigen. Die beiden Blockierstücke 38.3 sind mittels eines Bodens 38.4 der Aufnahme 38 miteinander einteilig verbunden.

Zur Montage der Scharspitze 30 wird diese mit ihrer Aufnahme 38 auf den Steckansatz 51 des Leitelementes 50 aufgeschoben. Wie Figur 4 erkennen lässt, kann bei dieser Fügebewegung der Steckansatz 51 des Leitelementes 50 an den Einführschrägen 38.2 eingefädelt werden, sodass eine zielgerichtete Montage möglich ist. Nachdem der Steckansatz 51 die Einführschrägen 38.2 passiert hat, gleitet das Ende 53 des Steckansatzes 51 zwischen die beiden Blockierstücke 38.3. Dabei ist die maßliche Zuordnung so gewählt, dass die Blockierstücke 38.3 seitlich den Seitenteilen 52 zugeordnet sind. Damit kann die Scharspitze, unter Berücksichtigung eines konstruktionstechnisch erforderlichen Minimalspiels formschlüssig quer zur Werkzeugvorschubrichtung an den Blockierstücken 38.3 festgelegt werden. Für einen definierten Sitz sind dabei dann der Boden 38.4 und das Ende 53 des Steckansatzes 51 beabstandet angeordnet (siehe Spiel S in Figur 4). Weiterhin sind auch die Einführschrägen 38.2 im geringen Abstand zu den Führungsschrägen 54 angeordnet (siehe Spiel S in Figur 4).

Nachdem die Scharspitze 30 mit ihrer Aufnahme 38 an dem Steckansatz 51 des Leitelementes 50 festgelegt wurde, ist die Schraubaufnahme 33 der Scharspitze 30 in Flucht zu einer Schraubaufnahme des Zinkens 10 angeordnet. Nun kann eine Befestigungsschraube durch die zueinander fluchtenden Schraubaufnahmen geführt und die Scharspitze 30 mit nur einer Befestigungsschraube am Zinken 10 festgelegt werden. Die verdrehsichere Zuordnung der Scharspitze 30 zu dem Zinken 10 wird dabei über die formschlüssige Blockade zwischen dem Steckansatz 51 und der Aufnahme 38 gewährleistet.

Im montierten Zustand steht die Scharspitze 30 im Bereich der Aufnahme 38 mit ihrer dort endenden Ableitfläche 34 über die Oberseite des Leitelementes 50 über. Wie Figur 3 erkennen lässt, ergibt sich damit ein Absatz mit einem Überstand T. Dieser Überstand T dient wieder als Deflektor, der Erdreich vom Schraubenkopf, welcher in der Schraubaufnahme 57 gehalten ist (siehe Figur 1) ableitet. Um diese Funktion zuverlässig erfüllen zu können, sollte das Abstandsmaß T mindestens 8 mm betragen. Eine optimale Verschleißschutzwirkung wird bei einem Überstand ≥ 12 mm bewirkt.

## Patentansprüche

1. Scharspitze (30) für eine landwirtschaftliche Bodenbearbeitungsmaschine mit einem Basisteil (31), das eine Schneide (40.3) aufweist, wobei das Basisteil (31) eine Schraubaufnahme (33) an einem Schneidenträger (37) zur Befestigung an einem Träger, insbesondere Zinken (10) der landwirtschaftlichen Bodenbearbeitungsmaschine aufweist,
**dadurch gekennzeichnet,**
**dass** das Basisteil (31) eine Aufnahme (38) zur Aufnahme eines freien Endes eines Leitelementes (50) aufweist, die in Werkzeugvorschubrichtung (V) mittels eines Deckabschnitts (38.1) überdeckt.

2. Scharspitze nach Anspruch 1,
**dadurch gekennzeichnet,**
**dass** die Aufnahme (38) zur Rückseite des Basisteils (31) hin geöffnet ist und seitlich eine Steckaufnahme bildet.

3. Scharspitze nach Anspruch 1 oder 2,
**dadurch gekennzeichnet,**
**dass** der Aufnahme (38) wenigstens ein Blockierstück (38.3) zur formschlüssigen Arretierung eines Leitelement (50) quer zur Werkzeugvorschubrichtung aufweist.

4. Scharspitze nach Anspruch 3,
**dadurch gekennzeichnet,**
**dass** die Aufnahme zwei quer zur Werkzeugvorschubrichtung zueinander beabstandet angeordnete Blockierstücke (38.3) aufweist.

5. Scharspitze nach Anspruch 3,
**dadurch gekennzeichnet,**
**dass** im Bereich des Deckabschnitts (38.1) zwei Blockierstücke (38.3) an das Basisteil (31) rückseitig angeformt sind,
und **dass** die Blockierstücke (38.3) Anlageflächen bilden.

6. Scharspitze nach einem der Ansprüche 3 bis 5,
**dadurch gekennzeichnet,**
**dass** die Aufnahme (38) einen Verbindungsabschnitt (38.4) aufweist, der die Blockierstücke (38.3) einteilig miteinander verbindet.

7. Scharspitze nach einem der Ansprüche 1 bis 6,
**dadurch gekennzeichnet,**
**dass** eine Steckaufnahme der Aufnahme seitlich mittels zweier zueinander beabstandet angeordneter Einführschrägen (38.2) begrenzt ist.

8. Scharspitze nach einem der Ansprüche 1 bis 7,
**dadurch gekennzeichnet,**
**dass** der Schraubaufnahme (33) in Werkzeugvorschubrichtung (V) vorgelagert ein Vorsprung (34.1) zugeordnet ist, der über eine Ableitfläche (34) vorsteht.

9. Werkzeugkombination mit einer Scharspitze (30) und einem daran angeschlossenen Leitelement (50), wobei die Scharspitze (30) und das Leitelement (50) Schraubaufnahmen (33, 57) zur Befestigung an einem Zinken (10) aufweisen,
**dadurch gekennzeichnet,**
**dass** das Leitelement (50) eine Schraubaufnahme (57) aufweist, die in Werkzeugvorschubrichtung (V) mittels eines Deckabschnitts (38.1) der Scharspitze (30) überdeckt ist.

10. Werkzeugkombination nach Anspruch 9,
**dadurch gekennzeichnet,**
**dass** die Scharspitze (30) und das Leitelement (50) quer zur Werkzeugvorschubrichtung (V) mittels eines oder mehreren Blockierstücken (38.3) formschlüssig gegeneinander blockiert sind.

11. Werkzeugkombination nach Anspruch 9 oder 10,
**dadurch gekennzeichnet,**
**dass** die Scharspitze (30) mit einer Schraubaufnahme (33) ausgestattet ist.

12. Werkzeugkombination nach einem der Ansprüche 9 bis 11,
**dadurch gekennzeichnet,**
**dass** das Leitelement (50) im Bereich seines der Scharspitze (30) zugewandten Endes einen Steckansatz (51) aufweist, der seitlich in die Aufnahme (38) eingesteckt ist.

13. Werkzeugkombination nach Anspruch 12,
**dadurch gekennzeichnet,**
**dass** der Steckansatz (51) zwei V-förmig zueinander angestellte Führungsschrägen (54) bildet.

14. Werkzeugkombination nach einem der Ansprüche 9 bis 13,
**dadurch gekennzeichnet,**
**dass** das Leitelement (50) im Anschlussbereich an die Scharspitze (30) mit einem Hartstoffelement (56), insbesondere einer Panzerschicht, oder dergleichen versehen ist.

15. Werkzeugkombination nach einem der Ansprüche 9 bis 14,
**gekennzeichnet**
**durch** eine Scharspitze (30) nach einem der Ansprüche 1 bis 8.

## Claims

1. Share point (30) for an agricultural soil working machine, comprising a base part (31) which has a cutting edge (40.3), wherein the base part (31) has a screw receptacle (33) on a cutting edge carrier (37) to fix on a carrier, in particular tines (10), of the agricultural soil working machine,
**characterized in that**
the base part (31) comprises a receptacle (38) to receive a free end of a guide element (50) which overlaps in the tool feed direction (V) by means of a cover section (38.1).

2. Share point according to claim 1,
**characterized in that**
the receptacle (38) is opened towards the rear side of the base part (31) and laterally forms a plug-in receptacle.

3. Share point according to claim 1 or 2,
**characterized in that**
the receptacle (38) has at least one blocking piece (38.3) for positively locking a guide element (50) transversely with respect to the tool feed direction.

4. Share point according to claim 3,
**characterized in that**
the receptacle has two blocking pieces (38.3) arranged at a distance from each other transversely to the tool feed direction.

5. Share point according to claim 3,
**characterized in that**
two blocking pieces (38.3) are integrally formed on the base part (31) in the region of the cover section (38.1), wherein the blocking pieces (38.3) form contact surfaces.

6. Share point according to one of the claims 3 to 5,
**characterized in that**
the receptacle (38) comprises a connecting section (38.4) to connect the blocking pieces (38.3) integrally with one another.

7. Share point according to one of the claims 1 to 6,
**characterized in that**
a plug-in receptacle of the receptacle is delimited laterally by means of two insertion bevels (38.2) arranged at a distance from one another.

8. Share point according to one of the claims 1 to 7,
**characterized in that**
a projection (34.1), which projects over a discharge surface (34), is associated with the screw receptacle (33) in the tool feed direction (V).

9. Tool combination with a share point (30) and a guide element (50) connected thereto, wherein the share point (30) and the guide element (50) comprise screw receptacles (33, 57) for attachment to a tine (10)
**characterized in that**
the guide element (50) has a screw receptacle (57) which is covered in the tool feed direction (V) by means of a cover section (38.1) of the share point (30).

10. Tool combination according to claim 9,
**characterized in that**
the share point (30) and the guide element (50) are blocked relative to one another transversely to the tool feed direction (V) by means of one or more blocking pieces (38.3).

11. Tool combination according to claim 9 or 10,
**characterized in that**
the share point (30) is provided with a screw receptacle (33).

12. Tool combination according to one of the claims 9 to 11,
**characterized in that**
the guide element (50) has, in the region of its end facing the share point (30), a plug-in projection (51) which is laterally plugged into the receptacle (38).

13. Tool combination according to claim 12,
**characterized in that**
the plug-in projection (51) comprises two guide bevels (54) forming a V-shape with respect to one another

14. Tool combination according to one of the claims 9 to 13,
**characterized in that**
the guide element (50) is provided with a hard material element (56), in particular an armored layer or the like, in the connection region of the share point (30).

15. Tool combination according to one of the claims 9 to 14, **characterized in that**
a share point (30) is provided according to one of claims 1 to 8.

## Revendications

1. Pointe de soc (30) pour une machine agricole de traitement du sol, avec une partie de base (31) qui présente une lame (40.3), la partie de base (31) présentant un logement fileté (33) sur un porte-lame (37) pour la fixation sur un support, en particulier une dent (10) de la machine agricole de traitement du sol,
**caractérisée en ce que**
la partie de base (31) présente un logement (38) pour loger une extrémité libre d'un élément de guidage (50) qui est recouvert dans la direction d'avance d'outil (V) au moyen d'un tronçon de couverture (38.1).

2. Pointe de soc selon la revendication 1,
**caractérisée en ce que**
le logement (38) est ouvert vers le côté arrière de la partie de base (31) et forme latéralement un logement d'enfichage.

3. Pointe de soc selon la revendication 1 ou 2,
**caractérisée en ce que**
le logement (38) présente au moins une pièce de blocage (38.3) pour arrêter par liaison de forme un élément de guidage (50) transversalement à la direction d'avance d'outil.

4. Pointe de soc selon la revendication 3,
**caractérisée en ce que**
le logement présente deux pièces de blocage (38.3) disposées de façon espacée l'une de l'autre transversalement à la direction d'avance d'outil (V).

5. Pointe de soc selon la revendication 3,
**caractérisée en ce que**,
dans la zone du tronçon de couverture (38.1), deux pièces de blocage (38.3) sont formées sur la partie de base (31) côté arrière,
et **en ce que** les pièces de blocage (38.3) forment des surfaces d'appui.

6. Pointe de soc selon l'une des revendications 3 à 5,
**caractérisée en ce que**
le logement (38) présente un tronçon de raccordement (38.4) qui raccorde entre elles d'une seule pièce les pièces de blocage (38.3).

7. Pointe de soc selon l'une des revendications 1 à 6,
**caractérisée en ce**
**qu'**un logement d'enfichage du logement est limité latéralement au moyen de deux pentes d'introduction (38.2) disposées de façon espacée l'une de l'autre.

8. Pointe de soc selon l'une des revendications 1 à 7,
**caractérisée en ce**
**qu'**une saillie (34.1) est affectée en amont du logement fileté (33) dans la direction d'avance d'outil (V) et dépasse au-dessus d'une surface de déviation (34).

9. Combinaison d'outils avec une pointe de soc (30) et un élément de guidage (50) qui y est raccordé, la pointe de soc (30) et l'élément de guidage (50) présentant des logements filetés (33, 57) pour la fixation sur une dent (10),
**caractérisée en ce que**
l'élément de guidage (50) présente un logement fileté (57) qui est recouvert dans la direction d'avance d'outil (V) au moyen d'un tronçon de couverture (38.1) de la pointe de soc (30).

10. Combinaison d'outils selon la revendication 9,
**caractérisée en ce que**
la pointe de soc (30) et l'élément de guidage (50) sont bloqués l'une contre l'autre par liaison de forme transversalement à la direction d'avance d'outil (V) au moyen d'une ou de plusieurs pièces de blocage (38.3)

11. Combinaison d'outils selon la revendication 9 ou 10,
**caractérisée en ce que**
la pointe de soc (30) est équipée d'un logement fileté (33).

12. Combinaison d'outils selon l'une des revendications 9 à 11,
**caractérisée en ce que**,
dans la zone de son extrémité tournée vers la pointe de soc (30), l'élément de guidage (50) présente un embout d'enfichage (51) qui est enfiché latéralement dans le logement (38).

13. Combinaison d'outils selon la revendication 12,
**caractérisée en ce que** l'embout d'enfichage (51) forme deux pentes de guidage (54) placées en V l'une par rapport à l'autre.

14. Combinaison d'outils selon l'une des revendications 9 à 13,
**caractérisée en ce que**,
dans la zone de connexion à la pointe de soc (30), l'élément de guidage (50) est muni d'un élément en matériau dur (56), en particulier une couche de blindage, ou similaire.

15. Combinaison d'outils selon l'une des revendications 9 à 14,
**caractérisée**
**par** une pointe de soc (30) selon l'une des revendications 1 à 8.
